# EUROPÄISCHE PATENTSCHRIFT

(11) **EP 3 956 651 B1**
(45) Veröffentlichungstag und Bekanntmachung des Hinweises auf die Patenterteilung: **28.02.2024**
(21) Anmeldenummer: 20723017.8
(22) Anmeldetag: 16.04.2020
(51) Int. Cl.: G01N 21/64, G02B 21/00

(54) **FLUORESZENZMIKROSKOP UND VERFAHREN ZUR ABBILDUNG EINER PROBE**
FLUORESCENCE MICROSCOPE AND METHOD FOR IMAGING A SAMPLE
MICROSCOPE À FLUORESCENCE ET PROCÉDÉ D'ILLUSTRATION D'UN ÉCHANTILLON

(30) Priorität: 17.04.2019 DE 102019110160
(43) Veröffentlichungstag der Anmeldung: 23.02.2022
(73) Patentinhaber: Leica Microsystems CMS GmbH, 35578 Wetzlar (DE)
(72) Erfinder: FÖLLING, Jonas, 69115 Heidelberg (DE); FRIEDRICH, Lars, 69469 Weinheim (DE)
(74) Vertreter: Schaumburg und Partner Patentanwälte mbB
(86) Internationale Anmeldenummer: PCT/EP2020/060696
(87) Internationale Veröffentlichungsnummer: WO 2020/212480

(56) Entgegenhaltungen:
- DE-U1-202013 102 039
- DE-U1-202015 001 565
- AUKSORIUS E ET AL: "Stimulated emission depletion microscopy with a supercontinuum source and fluorescence lifetime imaging", OPTICS LETTERS, Bd. 33, Nr. 2, 2008, Seite 113, XP055090361, ISSN: 0146-9592, DOI: 10.1364/OL.33.000113
- BLOM H AND WIDENGREN J: "Stimulated Emission Depletion Microscopy", CHEMICAL REVIEWS, Bd. 117, Nr. 11, 14. Juni 2017 (2017-06-14), Seiten 7377-7427, XP055710257, US ISSN: 0009-2665, DOI: 10.1021/acs.chemrev.6b00653

## Beschreibung

### Technisches Gebiet

Die Erfindung betrifft ein Fluoreszenzmikroskop sowie ein Verfahren zur Abbildung einer Probe unter Verwendung eines Fluoreszenzmikroskops.

### Hintergrund

Auf dem Gebiet der Fluoreszenzmikroskopie kommt zur höchstauflösenden Abbildung einer Probe häufig das sogenannte STED-Verfahren zur Anwendung, bei dem die Probe mit einer Lichtverteilung beleuchtet wird, die aus einer Überlagerung von Anregungslicht und Abregungslicht generiert wird. STED steht hierbei für "Stimulated Emission Depletion". Dabei ist das Anregungslicht darauf ausgelegt, in der Probe vorhandene Fluorophore zur spontanen Emission von Fluoreszenzlicht anzuregen. Demgegenüber dient das Abregungslicht dazu, die durch das Anregungslicht angeregten Fluorophore im Wege einer stimulierten Emission von Fluoreszenzlicht abzuregen. Zur Steigerung der Bildauflösung wird dem Anregungslicht, das in Form eines Laserstrahls auf den Beleuchtungszielpunkt in der Probe fokussiert wird, das Abregungslicht mit einer speziellen Lichtverteilung überlagert. Diese Abregungslichtverteilung weist typischerweise eine zentrale Intensitätsnullstelle auf, während die Intensität um diese Nullstelle herum möglichst schnell ansteigt. Um die bestmögliche Bildauflösung zu erzielen, ist die Abregungslichtverteilung der Anregungslichtverteilung so zu überlagern, dass die Nullstelle der Abregungslichtverteilung präzise mit dem Intensitätsmaximum der Anregungslichtverteilung zusammenfällt. Ist dies gewährleistet, so wird in dem Beleuchtungszielpunkt die spontane Emission von Fluoreszenzlicht in den Außenbereichen der Anregungslichtverteilung unterdrückt, so dass spontan emittiertes Fluoreszenzlicht nur aus einem zentralen Bereich um die Nullstelle der Abregungslichtverteilung herum detektiert wird.

Wird dieser Probenbereich in einem rasternden Verfahren über eine Vielzahl von Beleuchtungszielpunkten der Probe bewegt, so kann durch die Detektion des durch die Abregungslichtverteilung nicht unterdrückten Fluoreszenzlichtes ein hochaufgelöstes Bild der Probe gewonnen werden.

Die Abregungslichtverteilung hat typischerweise eine andere Wellenlänge als die Anregungslichtverteilung. Zumeist ist die Abregungslichtverteilung stark rotverschoben, so dass ihre Wellenlänge zwar im Emissionsspektrum, nicht aber im Anregungsspektrum des Fluorophors liegt. Dadurch ist gewährleistet, dass die Abregungslichtverteilung die angeregten Fluorophore durch stimulierte Emission abregt, ohne sie erneut anzuregen.

Bei dieser Art der Mikroskopie werden häufig kurzpulsige Laserlichtquellen für Anregung und Abregung verwendet. Die Lichtquelle, die das Anregungslicht bereitstellt, kann beispielsweise mit einer Pulslänge von etwa 150 ps betrieben werden. Demgegenüber arbeitet die Lichtquelle, deren Licht zur Abregung der Fluorophore verwendet wird, typischerweise mit einer etwas längeren Pulslänge, z.B. etwa 800 ps.

Damit eine effektive stimulierte Emission und dadurch eine Auflösungserhöhung erzielt werden, müssen die Anregungspulse und die Abregungspulse nicht nur räumlich gut überlagert sein, sondern auch zeitlich präzise miteinander synchronisiert werden. Insbesondere ist sicherzustellen, dass der Abregungslichtpuls mit einer kurzen Verzögerung nach dem Anregungslichtpuls auf den Beleuchtungszielpunkt fällt. Unter einer kurzen Verzögerung ist dabei ein Zeitraum zu verstehen, der kurz im Vergleich zur mittleren Lebensdauer des angeregten Zustands des Fluorophors ist. Diese mittlere Lebensdauer liegt typischerweise in einem Bereich von einer bis einigen Nanosekunden. Ist die Verzögerung zwischen den beiden Lichtpulsen zu kurz, oder erfolgt die Beleuchtung mit dem Abregungslichtpuls gar früher als mit dem Anregungslichtpuls, so findet keine stimulierte Emission statt, da die Fluorophore durch das Anregungslicht noch gar nicht in den angeregten Zustand überführt worden sind. Ist demgegenüber die Verzögerung zwischen den beiden Lichtpulsen zu lang, so beginnen die Fluorophore nach der Anregung in den Bereichen der Anregungslichtverteilung, in denen eigentlich durch stimulierte Emission die spontane Emission von Fluoreszenzlicht unterdrückt werden soll, schon wieder Fluoreszenzlicht im Wege der spontanen Emission auszusenden. Dies führt zu einer verschlechterten Auflösung des Fluoreszenzmikroskops.

Ein Fluoreszenzmikroskop nach dem Oberbegriff des Anspruchs 1 offenbart die Veröffentlichung von AUKSORIUS E. et al.: "Stimulated emission depletion microscopy with a supercontinuum source and fluorescence lifetime imaging", OPTICS LETTERS, Bd. 33, Nr. 2, 2008, XP055090361, ISSN: 0146-9592, DOI: 10.1364/OL.33.000113. Bei diesem vorbekannten Mikroskop wird die von einer Probe abgegebene Fluoreszenzstrahlung auf Basis einer zeitkorrelierten Einzelphotonenzählung detektiert. Das Mikroskop enthält einen Ti:Sa-Laser, der gepulstes Laserlicht auf einen polarisierenden Strahlteiler emittiert, der das Laserlicht polarisationsabhängig aufspaltet. Die beiden unterschiedlich polarisierten Lichtanteile propagieren in verschiedenen Beleuchtungsstrahlengängen, bevor sie wieder zusammengeführt werden, um die Probe zu beleuchten. Der die Anregungslichtverteilung bildende Lichtanteil wird einer Verzögerungseinheit zugeführt, mit der sich die relative Verzögerung zwischen dem gepulsten Anregungslicht und dem gepulsten STED-Licht einstellen lässt. Die Abregung wird maximiert, indem die relative Verzögerung zwischen Anregungslicht und Abregungslicht eingestellt wird.

Aus der Druckschrift DE 20 2013 102039 U1 ist ein STED-Mikroskop bekannt, bei dem der zeitliche Intensitätsverlauf des von einem Detektor erfassten Fluoreszenzlichtes bestimmt und das Intensitätsmuster des zeitabhängigen Intensitätsverlaufs einer Pattern-Matching-Analyse unterzogen wird. Ziel dieser Analyse ist die Ermittlung der Intensität des Fluoreszenzlichtes abhängig davon, ob dieses Licht aus dem zentralen Bereich der Nullstelle oder aus dem umgebenden restlichen Fokusbereich stammt.

DE 20 2015 001565 U1 beschreibt ein konfokales Fluoreszenzmikroskop zum Abbilden einer fluoreszierenden Probe oder einer mit fluoreszierenden Einheiten markierten Struktur in einer Probe oder zum Beobachten von Fluktuationen von Fluorophoren, welche in einer Probe enthalten sind, mit Hilfe der Fluoreszenzkorrelationsspektroskopie.

Die Veröffentlichung "Stimulated Emission Depletion Microscopy", BLOM H & WIDENGREN J, CHEMICAL REVIEWS, Bd. 117, Nr. 11 (2017-06-14) ist eine Zusammenfassung zur STED-Mikroskopie.

Aufgabe der Erfindung ist es deshalb, ein Fluoreszenzmikroskop und ein Verfahren zur Abbildung einer Probe unter Verwendung eines solchen Fluoreszenzmikroskops anzugeben, die es ermöglichen, die Anregungslichtverteilung und die Abregungslichtverteilung in einfacher Weise präzise zeitlich aufeinander abzustimmen.

### Kurzdarstellung

Die Erfindung löst diese Aufgabe durch die Gegenstände der unabhängigen Ansprüche, somit durch ein Fluoreszenzmikroskop nach Anspruch 1 und durch ein Verfahren zur Abbildung einer Probe unter Verwendung eines Fluoreszenzmikroskops nach Anspruch 14.

Vorteilhafte Weiterbildungen sind in den abhängigen Ansprüchen angegeben.

Es wird ein Fluoreszenzmikroskop, insbesondere ein STED-Mikroskop vorgeschlagen, umfassend eine Anregungslichtquelle, die ausgebildet ist, eine gepulste oder modulierte Anregungslichtverteilung zu erzeugen, welche in der Probe vorhandene Fluorophore zur spontanen Emission von Fluoreszenzphotonen anregt, und eine Abregungslichtquelle, die ausgebildet ist, eine gepulste oder modulierte Abregungslichtverteilung zu erzeugen, welche die durch die Anregungslichtverteilung in der Probe angeregten Fluorophore im Wege einer stimulierten Emission von Fluoreszenzphotonen abregt. Das Fluoreszenzmikroskop umfasst ferner eine Beleuchtungseinheit, die ausgebildet ist, die Anregungslichtverteilung und die Abregungslichtverteilung derart zusammenzuführen, dass ein Intensitätsmaximum der Anregungslichtverteilung und ein Intensitätsminimum der Abregungslichtverteilung in einem Beleuchtungszielpunkt einander räumlich überlagert sind. Ferner umfasst das Fluoreszenzmikroskop einen Detektor, der ausgebildet ist, die aus dem Beleuchtungszielpunkt emittierten Fluoreszenzphotonen in Abhängigkeit ihrer Ankunftszeiten zu erfassen. Schließlich umfasst das Fluoreszenzmikroskop einen Prozessor, der ausgebildet ist, die in dem Beleuchtungszielpunkt erfassten Fluoreszenzphotonen hinsichtlich ihrer Ankunftszeiten auszuwerten und auf Basis dieser Auswertung eine Verzögerung zu steuern, die ein Lichtpuls oder eine Lichtmodulation der Abregungslichtverteilung am Ort des Beleuchtungszielpunktes gegenüber einem Lichtpuls oder einer Lichtmodulation der Anregungslichtverteilung aufweist.

Mit diesem Fluoreszenzmikroskop ist es möglich, nicht allein die Intensität des aus dem jeweiligen Beleuchtungszielpunkt emittierten Fluoreszenzlichtes zu messen, wie es in herkömmlichen STED-Mikroskopen üblich ist. Vielmehr ist der in dem Fluoreszenzmikroskop vorgesehene Prozessor zusätzlich ausgebildet, die Ankunftszeiten der durch den Detektor erfassten Fluoreszenzphotonen zu analysieren, die mit der Lebensdauer des angeregten Zustands der Fluorophore korrelieren. Auf Basis dieser Analyse steuert der Prozessor die Synchronisation der Abregungslichtverteilung relativ zur Anregungslichtverteilung. Zum Zwecke der zeitlichen Referenzierung sind die beiden Lichtquellen jeweils als gepulste oder modulierte Quellen ausgebildet, wobei die Verwendung einer gepulsten Quelle gegenüber einer modulierten Quelle gewisse Vorteile bietet, da die im vorliegenden Kontext betrachteten Lebensdauer der Fluorophore in der Regel so kurz sind, dass eine sehr schnelle Lichtmodulation erforderlich ist, um eine präzise Synchronisation zu ermöglichen.

Mit den Ankunftszeiten der Fluoreszenzphotonen steht eine Messgröße zur Verfügung, auf deren Grundlage sich die Synchronisation zwischen der Abregungslichtverteilung und der Anregungslichtverteilung zur Optimierung der Abbildungsqualität einstellen lässt. Diese Messgröße ist insbesondere nicht an andere Systemparameter gekoppelt, welche die Abbildungsqualität ebenfalls beeinflussen. So besteht bei herkömmlichen STED-Mikroskopen insbesondere das Problem, dass eine nur schlecht eingestellte zeitliche Abstimmung zwischen Anregungslicht und Abregungslicht zwar, wie eingangs erläutert, für den Benutzer sichtbar zu einer schlechteren optischen Auflösung führt, Letztere aber auch aus zahlreichen anderen Gründen gegeben sein kann. So ergibt sich ein ähnlicher Effekt der Auflösungsverschlechterung beispielsweise auch dann, wenn die Intensitäten von Anregungs- und Abregungslicht nicht gut aufeinander abgestimmt sind. Gleiches gilt bei einer unpräzisen räumlichen Überlagerung der Lichtverteilungen oder auch fürden Fall, dass das Intensitätsminimum der Abregungslichtverteilung keine wirkliche Nullstelle ist, d.h. zuviel Restlicht im zentralen Minimum der Abregungslichtverteilung vorhanden ist. Mit den durch den Detektor erfassten Ankunftszeiten der Fluoreszenzphotonen wird eine von den vorgenannten Einflüssen unabhängige Messgröße bereitgestellt, die eine Optimierung der zeitlichen Abstimmung der Lichtverteilungen auch dann ermöglicht, wenn z.B. die räumliche Überlagerung der Lichtverteilungen nicht optimal ist oder auch die Lichtintensitäten nicht präzise aufeinander abgestimmt sind.

Insbesondere ist es mit dem vorgeschlagenen Fluoreszenzmikroskop möglich, die zeitliche Abstimmung zwischen Anregungs- und Abregungslicht automatisiert, beispielsweise durch Abarbeiten eines vorgegebenen Algorithmus, zu optimieren, ohne dass es hierfür, wie bisher üblich, auf die Erfahrung und die Geschicklichkeit des Benutzers ankommt. So wird dem Benutzer bei herkömmlichen Systemen typischerweise eine Voreinstellung vorgeschlagen, mit der zwar STED-Bilder erzeugt werden können. Jedoch ist deren Qualität in der Regel nicht optimal. Zur weiteren Optimierung erhält der Benutzer dann die Möglichkeit, relevante Parameter selbst feinzujustieren, bis die gewünschte Bildqualität erzielt ist. Zu diesen Parametern zählen, wie vorstehend erläutert, z.B. die relative Anordnung der Lichtverteilungen, die Lichtintensitäten von An- und Abregungslicht und auch der Zeitunterschied zwischen An- und Abregungslichtpuls. Zum Optimieren der Bildqualität muss der Benutzer bisher diese Parameter selbst anpassen und bei schlechter Bildqualität denjenigen Parameter bzw. diejenige Parameterkombination finden, welche die Bildqualität am günstigsten beeinflusst. Eine erfolgreiche Optimierung der Parameter ist daher bei herkömmlichen Systemen nicht zuletzt abhängig von der Erfahrung und der Geschicklichkeit des Benutzers und wegen der gegenseitigen Abhängigkeit der Parameter nur schwer zu automatisieren.

Die vorgeschlagene Lösung ist umso vorteilhafter, als die bestmögliche Synchronisation zwischen Anregungs- und Abregungslicht häufig mit der Art des verwendeten Fluorophors, aber auch von Probe zu Probe und sogar innerhalb einer Probe variiert. Dies liegt daran, dass sich die durchschnittliche Lebenszeit des angeregten Zustands von Fluorophor zu Fluorophor ändert und auch von der Mikroumgebung des Fluorophors abhängt.

Hervorzuheben ist, dass die vorstehend beschriebene zeitliche Abstimmung zwischen Anregungs- und Abregungslichtverteilung während der eigentlichen Bildaufnahme erfolgen kann. Somit ist das Fluoreszenzmikroskop besonders einfach handhabbar und stellt, was die Synchronisation der Lichtverteilungen betrifft, keine besonderen Anforderungen an den Benutzer.

Vorzugsweise ist der Detektor ausgebildet, die aus dem Beleuchtungszielpunkt emittierten Fluoreszenzphotonen durch zeitkorrelierte Einzelphotonenzählung in Abhängigkeit ihrer Ankunftszeiten zu erfassen. Die Anwendung einer solchen zeitkorrelierten Einzelphotonenzählung ermöglicht eine besonders präzise Erfassung der Ankunftszeiten.

In einer bevorzugten Ausführungsform ist der Detektor ausgebildet, die Ankunftszeiten der Fluoreszenzphotonen in Bezug auf eine Startzeit zu erfassen, die durch den Lichtpuls oder die Lichtmodulation der Anregungslichtverteilung oder der Abregungslichtlichtverteilung festgelegt ist. Insbesondere die Verwendung des Lichtpulses der Anregungslichtverteilung bietet die Möglichkeit einer zeitlichen Referenzierung, auf deren Basis sich die Ankunftszeiten der Fluoreszenzphotonen am Detektor präzise erfassen lassen.

Der Prozessor wertet die in dem Beleuchtungszielpunkt erfassten Fluoreszenzphotonen aus, indem er eine durch die erfassten Ankunftszeiten gegebene zeitliche Verteilung der Fluoreszenzphotonen mit einer Sollverteilung vergleicht und die Verzögerung auf Basis dieses Vergleichs steuert. In Form der durch den Detektor erfassten zeitlichen Verteilung der Fluoreszenzphotonen wird eine Messgröße zur Verfügung gestellt, die sich in einfacher Weise mit einer vorab festgelegten Sollverteilung vergleichen lässt. An Hand der Abweichung, welche die gemessene zeitliche Verteilung gegenüber der Sollverteilung aufweist, lässt sich dann die Verzögerung so steuern, dass die vorgenannte Abweichung minimiert wird. Dies kann insbesondere nach Art eines Regelkreises erfolgen. Die Sollverteilung kann abhängig von dem jeweils verwendeten Fluorophortyp vorgegeben werden, insbesondere unter Berücksichtigung der durchschnittlichen Lebenszeit des angeregten Zustands des Fluorophors.

Vorzugsweise weist die Sollverteilung zeitlich aufeinander folgend ein Verteilungsmaximum, einen ersten abfallenden Verteilungsabschnitt und einen zweiten, relativ schwächer abfallenden Verteilungsabschnitt auf. In dieser Ausführungsform stellt die zur Auswertung der erfassten Ankunftszeiten genutzte Sollverteilung eine Verteilung dar, die zwei verschiedene Populationen an Lebensdauern repräsentiert. Eine erste, kurzlebige Population, die dem an das Verteilungsmaximum anschließenden ersten abfallenden Verteilungsabschnitt zugeordnet ist, repräsentiert zu einem Teil Fluorophore, die sich an der Stelle des zentralen Intensitätsminimums der Abregungslichtverteilung befunden haben. Zum anderen Teil repräsentiert die erste, kurzlebige Population Fluorophore, die sich in Bereichen der Abregungslichtverteilung außerhalb des Intensitätsminimums befunden haben und denen es gelungen ist, ein Fluoreszenzphoton spontan zu emittieren, bevor sie durch die Abregungslichtverteilung im Wege der stimulierten Emission abgeregt worden sind. Die Wahrscheinlichkeit für das zuletzt angegebene Szenario sinkt aber mit der Dauer des Abregungslichtpulses, so dass diese Fluoreszenzphotonen nur direkt zu Beginn des Pulses des Abregungslichtes und kurz nach dem Puls des Anregungslichtes detektiert werden können. Fluoreszenzphotonen, die durch stimulierte Emission emittiert werden, haben im Wesentlichen die gleiche Wellenlänge wie das Abregungslicht und werden deshalb beispielsweise durch Verwendung eines geeigneten Sperrfilters nicht detektiert. Demgegenüber repräsentiert eine zweite, langlebige Population im Wesentlichen diejenigen Fluorophore, die nicht durch den Puls des Abregungslichtes abgeregt worden sind, d.h. diejenigen Fluorophore, die sich in dem Intensitätsminimum der Abregungslichtverteilung oder in dessen Nähe befunden haben. Die unterschiedlichen negativen Gradienten der beiden Verteilungsabschnitte kommen also dadurch zustande, dass während des dem ersten Verteilungsabschnitt zugeordneten Zeitraums die Photonenzählrate durch die Wirkung des Abregungslichts schneller abfällt als während des dem zweiten Verteilungsabschnitt zugeordneten Zeitraums, in dem die Photonenzählrate gemäß der spontanen Fluoreszenz des Fluorophors abfällt. Der zweite Verteilungsabschnitt zeigt dabei einen im Wesentlichen exponentiellen Abfall mit einer für das verwendete Fluorophor typischen Zeitkonstante, welche die exponentielle Abnahme des Fluoreszenzlichts durch spontane Emission widerspiegelt.

In einer besonders bevorzugten Ausführungsform stellt der Prozessor die Verzögerung auf Basis des Vergleichs nach Art eines Regelkreises ein. Auf diese Weise ist es möglich, während der gesamten Bildaufnahme eine optimale zeitliche Abstimmung zwischen Anregungslicht und Abregungslicht zu gewährleisten.

In einer vorteilhaften Ausführungsform umfasst das Fluoreszenzmikroskop eine Verzögerungseinheit, die durch den Prozessor auf Basis der Auswertung steuerbar ist, um die Verzögerung einzustellen. Durch Verwendung einer solchen durch den Prozessor ansteuerbaren Verzögerungseinheit ist es möglich, das Anregungslicht und das Abregungslicht mit vergleichsweise geringem technischen Aufwand präzise zu synchronisieren.

Die Verzögerungseinheit ist vorzugsweise der Anregungslichtquelle oder der Abregungslichtquelle vorgeschaltet und gibt an diese Lichtquelle ein erstes Triggersignal aus, um die Verzögerung einzustellen. In dieser Ausführungsform wird das Licht derjenigen Lichtquelle, der die Verzögerungseinheit vorgeschaltet ist, gegenüber dem Licht der anderen Lichtquelle verzögert. Ist die Verzögerungseinheit beispielsweise der Abregungslichtquelle vorgeschaltet, so erfolgt die Snchronisationseinstellung an Hand des Abregungslichtes, während das Anregungslicht zeitlich unbeeinflusst bleibt. Umgekehrt wird das Anregungslicht zeitlich beeinflusst, während das Abregungslicht in seinem zeitlichen Verlauf unverändert bleibt, wenn die Verzögerungseinheit der Anregungslichtquelle vorgeschaltet ist.

In einer bevorzugten Ausführungsform ist vorgesehen, dass die eine der beiden Lichtquellen, der die Verzögerungseinheit nicht vorgeschaltet ist, ein zweites Triggersignal an die Verzögerungseinheit ausgibt und die Verzögerungseinheit ein gegenüber diesem zweiten Triggersignal zeitlich verzögertes Signal als erstes Triggersignal erzeugt. Das zweite Triggersignal gibt hier gleichsam einen Referenztakt vor, bezüglich dessen das von einer der beiden Lichtquellen emittierte Licht so zu verzögern ist, dass die gewünschte zeitliche Abstimmung erzielt wird.

In der vorstehend erläuterten Ausführungsform gibt die eine Lichtquelle das zweite Triggersignal vorzugsweise an den Prozessor aus, wobei der Prozessor die Verzögerungseinheit auf Basis dieses zweiten Verzögerungssignals so ansteuert, dass die Verzögerungseinheit das erste Triggersignal erzeugt. Auf diese Weise kann der Prozessor auf Basis des von dieser Lichtquelle vorgegebenen Referenztaktes präzise die gewünschte Verzögerung des von der anderen Lichtquelle emittierten Lichtes vornehmen.

Die Beleuchtungseinheit enthält beispielsweise eine Phasenmaske, die das Intensitätsminimum der Abregungslichtverteilung erzeugt. Die Phasenmaske kann beispielsweise in Form eines optischen Transmissionsgitters ausgeführt sein, das die gewünschte Abregungslichtverteilung in der Probe erzeugt.

Das Intensitätsminimum der Abregungslichtverteilung ist vorzugsweise eine Intensitätsnullstelle. Je weniger Restlicht in dem Minimum der Abregungslichtverteilung vorhanden ist, desto besser ist die durch die Überlagerung von Abregungs- und Anregungslicht erzielte Auflösungssteigerung.

In einer bevorzugten Ausführungsform umfasst das Rastermikroskop eine Rastervorrichtung zum Abrastern mehrerer Beleuchtungszielpunkte mit der Anregungslichtverteilung und der Abregungslichtverteilung, wobei der Prozessor ausgebildet ist, mehrere die Beleuchtungszielpunkte repräsentierende Bildpunkte zu einem Probenbild zusammenzusetzen. Auf diese Weise ist es möglich, ein aus einer Vielzahl von Bildpunkten bestehendes zweidimensionales Probenbild zu erzeugen, bei dessen Bildaufnahme für jeden einzelnen Bildpunkt eine präzise zeitliche Abstimmung zwischen Anregungs- und Abregungslicht gewährleistet ist. Auch die Erzeugung eines eindimensionalen Linienbildes oder eines dreidimensionalen Volumenbildes ist auf diese Weise möglich.

In einer besonders bevorzugten Ausführungsform ist der Prozessor ausgebildet, die Verzögerung für verschiedene Bereiche des Probenbildes unterschiedlich zu steuern. Auf diese Weise kann die optimale Synchronisation nicht nur für unterschiedliche Fluorophore und unterschiedliche Proben, sondern auch für verschiedene Probenbereiche innerhalb einer einzigen Bildaufnahme dynamisch angepasst werden.

Die Erfindung stellt in einem weiteren Aspekt ein Verfahren zur Abbildung einer Probe unter Verwendung eines Fluoreszenzmikroskops bereit, umfassend folgende Schritte: Erzeugen einer Anregungslichtverteilung, welche in der Probe vorhandene Fluorophore zur spontanen Emission von Fluoreszenzphotonen anregt; Erzeugen einer Abregungslichtverteilung, welche die durch die Anregungslichtverteilung in der Probe angeregten Fluorophore im Wege einer stimulierten Emission von Fluoreszenzphotonen abregt; Zusammenführen der Anregungslichtverteilung und der Abregungslichtverteilung derart, dass ein Intensitätsmaximum der Anregungslichtverteilung und ein Intensitätsminimum der Abregungslichtverteilung in einem Beleuchtungszielpunkt einander räumlich überlagert sind; Erfassen der aus dem Beleuchtungszielpunkt emittierten Fluoreszenzphotonen in Abhängigkeit ihrer Ankunftszeiten ; Auswerten der in dem jeweiligen Beleuchtungszielpunkt erfassten Fluoreszenzphotonen hinsichtlich ihrer Ankunftszeiten; und Steuern einer Verzögerung, die ein Lichtpuls oder eine Lichtmodulation der Abregungslichtverteilung am Ort des Beleuchtungszielpunktes gegenüber einem Lichtpuls oder einer Lichtmodulation der Anregungslichtverteilung aufweist, auf Basis dieser Auswertung.

### Kurzbeschreibung der Figuren

Die Erfindung wird im Folgenden anhand von Ausführungsbeispielen unter Bezugnahme auf die Figuren erläutert. Darin zeigen:
- Fig. 1: eine schematische Darstellung eines Fluoreszenzmikroskops gemäß einem Ausführungsbeispiel;
- Fig. 2: Diagramme, welche die Überlagerung der Anregungslichtverteilung und der Abregungslichtverteilung sowie deren Auswirkung auf das erfasste Fluoreszenzsignal veranschaulichen;
- Fig. 3: ein Diagramm, das die Zahl an erfassten Fluoreszenzphotonen in Abhängigkeit der Ankunftszeiten in einem Fall zeigt, in dem die Abregungslichtverteilung wirkungslos ist;
- Fig. 4: ein Diagramm, das die Zahl an erfassten Fluoreszenzphotonen in Abhängigkeit der Ankunftszeiten in einem Fall zeigt, in dem die Anregungslichtverteilung und die Abregungslichtverteilung in einer gewünschten Weise zeitlich aufeinander abgestimmt sind; und
- Fig. 5: ein Diagramm, das die Zahl an erfassten Fluoreszenzphotonen in Abhängigkeit der Ankunftszeiten in einem Fall zeigt, in dem die Anregungslichtverteilung und die Abregungslichtverteilung nicht in der gewünschten Weise zeitlich aufeinander abgestimmt sind.

### Detaillierte Beschreibung

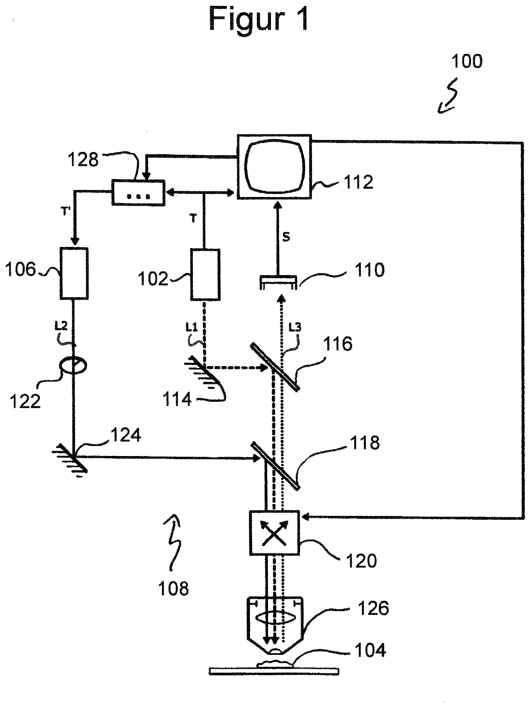

Figur 1 zeigt eine schematische Darstellung eines Fluoreszenzmikroskop 100 gemäß Ausführungsbeispiel. Im Folgenden sollen zunächst der grundlegende Aufbau und die grundlegende Funktionsweise des Fluoreszenzmikroskops 100 kurz umrissen werden, bevor anschließend eine konkrete Realisierung gemäß dem gezeigten Ausführungsbeispiel näher erläutert wird.

Das Fluoreszenzmikroskop 100 umfasst eine Anregungslichtquelle 102, die ausgebildet ist, eine gepulste oder modulierte Anregungslichtverteilung zu erzeugen, die in einer Probe 104 vorhandene Fluorophore zur spontanen Emission von Fluoreszenzlicht anregt. Die Wellenlänge der von der Anregungslichtquelle 102 erzeugten Anregungslichtverteilung ist somit auf die in der konkreten Anwendung verwendeten Fluorophore ausgelegt.

Das Fluoreszenzmikroskop 100 umfasst ferner eine Abregungslichtquelle 106, die ausgebildet ist, eine gepulste oder modulierte Abregungslichtverteilung zu erzeugen, welche die durch die Anregungslichtverteilung in der Probe 104 erzeugten Fluorophore durch stimulierte Emission von Fluoreszenzlicht abregt. Auch die Wellenlänge der von der Abregungslichtquelle 106 generierten Abregungslichtverteilung ist auf die in der konkreten Applikation verwendeten Fluorophore abgestimmt. Insbesondere ist die Wellenlänge der Abregungslichtverteilung so zu wählen, dass die in der Probe 104 vorhandenen Fluorophore bei Bestrahlung mit der Abregungslichtverteilung durch stimulierte Emission zuverlässig veranlasst werden, aus ihrem angeregten Zustand in den Grundzustand zurückzukehren. Zu diesem Zweck weist die Abregungslichtverteilung vorzugsweise eine Wellenlänge auf, die ungefähr gleich der Wellenlänge des Fluoreszenzlichts ist, das die Fluorophore beim Übergang aus dem angeregten Zustand in den Grundzustand emittieren.

Das Fluoreszenzmikroskop 100 weist ferner eine in Figur 1 allgemein mit 108 bezeichnete Beleuchtungseinheit auf. Letztere ist so ausgebildet, dass sie die Anregungslichtverteilung und die Abregungslichtverteilung derart zusammenführt, dass ein Intensistätsmaximum der Anregungslichtverteilung und ein Intensitätsminimum der Abregungslichtverteilung in einem Beleuchtungszielpunkt einander räumlich überlagert sind.

Das Fluoreszenzmikroskop 100 weist ferner einen Detektor 110 auf, der die aus dem Beleuchtungszielpunkt emittierten Fluoreszenzphotonen in Abhängigkeit ihrer Ankunftszeiten erfasst. Schließlich enthält das Fluoreszenzmikroskop einen Prozessor 112, der ausgebildet ist, die in dem Beleuchtungszielpunkt erfassten Fluoreszenzphotonen hinsichtlich ihrer Ankunftszeiten auszuwerten. Auf Basis dieser Auswertung steuert der Prozessor 112 eine Verzögerung, die ein Lichtpuls oder eine Lichtmodulation der Abregungslichtverteilung am Ort des Beleuchtungszielpunktes gegenüber einem Lichtpuls oder einer Lichtmodulation der Anregungslichtverteilung aufweist.

Der in Figur 1 konkret gezeigte Aufbau stellt lediglich eine beispielhafte Ausführungsform zur Umsetzung des vorstehend erläuterten Funktionsprinzips dar und soll insbesondere das Fluoreszenzmikroskop 100 nicht auf diese spezielle Ausführungsform beschränken. In der Ausführungsform nach Figur 1 sind beispielsweise sowohl die Anregungslichtquelle 102 als auch die Abregungslichtquelle 106 als gepulste Laserlichtquelle ausgeführt. Der Abregungslichtquelle 106 ist eine durch den Prozessor 112 ansteuerbare Verzögerungseinheit 128 vorgeordnet, deren Funktionsweise weiter unten im Detail erläutert wird. Die beiden Lichtquellen 102, 106 führen ihr Licht jeweils der Beleuchtungseinheit 108 zu, der in dem Ausführungsbeispiel nach Figur 1 sämtliche Mikroskopkomponenten mit Ausnahme der beiden Lichtquellen 102, 106, des Detektors 110, des Prozessors 112 und der Verzögerungseinheit 128 zuzuordnen sind.

Im Speziellen emittiert die Anregungslichtquelle 102 Anregungslicht L1, das über einen Spiegel 114 auf einen ersten wellenlängenselektiven Strahlteiler 116 reflektiert wird. Der erste wellenlängenselektive Strahlteiler 116 reflektiert das Anregungslicht L1 auf einen zweiten wellenlängenselektiven Strahlteiler 118, der das Anregungslicht L1 in Richtung einer Rastervorrichtung 120 transmittiert. Demgegenüber emittiert die Abregungslichtquelle 106 Abregungslicht L2 auf eine Phasenmaske 122, die das Abregungslicht L2 derart beeinflusst, dass die in der Probe 104 aus dem Anregungslicht L2 erzeugte Abregungslichtverteilung die gewünschte Nullstelle aufweist. Nach Durchtritt durch die Phasenmaske 122 wird dass Abregungslicht L2 an einem Spiegel 124 auf den zweiten wellenlängenselektiven Strahlteiler 118 reflektiert. Letzterer reflektiert das Abregungslicht L2 in Richtung der Rastervorrichtung 120, die von dem Prozessor 112 gesteuert wird.

Durch den zweiten wellenlängenselektiven Strahlteiler 118 werden also das Anregungslicht L1 und das Abregungslicht L2 einander überlagert und der Rastervorrichtung 120 zugeführt. Ausgehend von dieser wird die überlagerte Lichtverteilung durch ein Objektiv 126 auf den Beleuchtungszielpunkt fokussiert, wodurch in dem Beleuchtungszielpunkt die Lichtverteilung in der gewünschten Form generiert wird. Die Rastervorrichtung 120 sorgt dabei dafür, dass die überlagerte Lichtverteilung über die Probe 104 bewegt wird, so dass eine Vielzahl von Beleuchtungszielpunkten der Probe 104 mit dieser Lichtverteilung abgerastert wird.

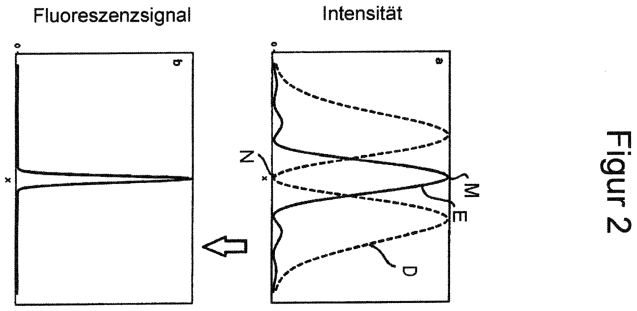

Figur 2a zeigt eine beispielhafte Überlagerung der Lichtverteilungen, wobei in diesem Beispiel der Einfachheit halber von einer eindimensionalen Lichtverteilung in Richtung x ausgegangen wird. In Figur 2a ist die Anregungslichtverteilung E mit einer durchgezogenen Linie und die Abregungslichtverteilung D mit einer gestrichelten Linie dargestellt. Die beiden Lichtverteilungen E, D werden durch die Beleuchtungseinheit 108 derart zusammengeführt, dass die Nullstelle N der Abregungslichtverteilung E in Richtung x mit dem Maximum M der Anregungslichtverteilung E zusammenfällt. Durch diese Überlagerung ergibt sich in dem jeweiligen Beleuchtungszielpunkt ein Fluoreszenzsignal, wie es in Figur 2b veranschaulicht ist. Dieses Fluoreszenzsignal zeigt ein intensitätsstarkes und scharfes Maximum, dessen vergleichsweise geringe Halbwertsbreite die räumliche Auflösung in Richtung x bestimmt.

Wie wiederum in Figur 1 gezeigt, emittiert die mit der überlagerten Lichtverteilung beleuchtete Probe 104 Fluoreszenzlicht L3, welches über das Objektiv 126 auf die Rastervorrichtung 120 zurückgeführt wird. In dem Ausführungsbeispiel nach Figur 1 ist somit eine sogenannte Descanned-Detektion des Fluoreszenzlichtes L3 vorgesehen. Anschließend passiert das Fluoreszenzlicht L3 nacheinander die beiden wellenlängenselektiven Strahlteiler und fällt auf den Detektor 110, der das Fluorszenzlicht L3 detektiert und ein entsprechendes Ausgangssignal S an den Prozessor 112 ausgibt.

Der Detektor 110 erfasst die das Fluorszenzlicht L3 repräsentierenden Fluoreszenzphotonen in Abhängigkeit ihrer Ankunftszeit. Dabei ist der Detektor 110 beispielsweise so ausgeführt, dass er die Ankunftszeiten im Wege einer zeitkorrelierten Einzelphotonenzählung detektiert. Der Detektor 110 erfasst die Ankunftszeiten der Fluoreszenzphotonen in Bezug auf eine Startzeit, die in dem vorliegenden Ausführungsbeispiel durch einen Lichtpuls festgelegt ist, den die Anregungslichtquelle 102 emittiert. Hierzu gibt die Anregungslichtquelle 102 ein elektrisches Triggersignal T an den Prozessor 112 aus, aus dem die Zeitpunkte der einzelnen Laserpulse und damit die vorgenannten Startzeiten bestimmt werden können.

Die Anregungslichtquelle 102 gibt das Triggersignal T zusätzlich an die Verzögerungseinheit 128 aus, die ein gegenüber dem Triggersignal T zeitlich verzögertes Triggersignal T' generiert und dieses der Abregungslichtquelle 106 zuführt. Die zeitliche Verzögerung des von der Verzögerungseinheit 128 ausgegebenen Triggersignals T' wird durch den mit der Verzögerungseinheit 128 gekoppelten Prozessor 112 eingestellt. Hierzu wertet der Prozessor 112 das Ausgangssignal S aus, das von dem Detektor 110 an den Prozessor 112 ausgegeben wird und eine durch die erfassten Ankunftszeiten gegebene zeitliche Verteilung der Fluoreszenzphotonen repräsentiert. Im Ergebnis stellt der Prozessor 102 das die Abregungslichtquelle 106 steuernde Triggersignal T' so ein, dass der Lichtpuls der Abregungslichtverteilung D am Ort des Beleuchtungszielpunktes gegenüber dem Lichtpuls der Anregungslichtverteilung E die gewünschte Verzögerung aufweist.

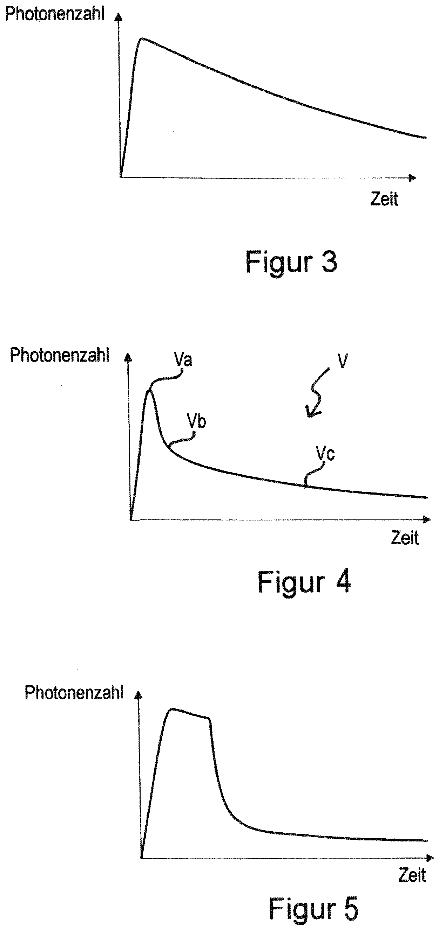

Unter Bezugnahme auf die Figuren 3 bis 5 wird im Folgenden an Hand eines Beispiels erläutert, wie der Prozessor 112 das Ausgangssignal S auswertet, um die Verzögerung des Triggersignals T', das die Verzögerungseinheit 128 an die Abregungslichtquelle 106 ausgibt, gegenüber dem als Referenztakt wirkenden Triggersignal T einzustellen, das von der Anregungslichtquelle 102 generiert wird.

Figur 3 zeigt zunächst eine typische Verteilung der Fluoreszenzphotonen in Abhängigkeit von deren Ankunftszeiten am Detektor 110 in einem Fall, in dem die Abregungslichtverteilung D das Fluoreszenzverhalten der Probe 104 nicht beeinflusst, d.h. die Abregungslichtverteilung D für die Bildgebung wirkungslos ist. Dieser Fall ist selbstredend gegeben, wenn das Abregungslicht L2 abgeschaltet ist, aber beispielsweise auch, wenn der Abregungspuls vor dem Anregungspuls auftritt. Bei wirkungsloser Abregungslichtverteilung D zeigt sich der typische exponentiell abfallende Verlauf der Photonenzählrate mit einer Zeitkonstante, die der mittleren Lebensdauer des angeregten Zustands der Fluorophore entspricht.

Demgegenüber zeigt Figur 4 eine zeitliche Verteilung der Fluoreszenzphotonen, die sich für den Fall ergibt, dass der Lichtpuls der Abregungslichtverteilung D in dem Beleuchtungszielpunkt eine für die Abbildungsqualität optimale Verzögerung gegenüber dem Lichtpuls der Anregungslichtverteilung E aufweist. Der in Figur 4 dargestellte Verlauf kann deshalb in dem Prozessor 112 als eine Sollverteilung V hinterlegt sein, auf die der Prozessor 112 zur Auswertung der durch den Detektor 110 erfassten Fluoreszenzphotonen zurückgreift. Hierzu vergleicht der Prozessor 112 die tatsächlich erfassten Ankunftszeiten der Fluoreszenzphotonen mit der Sollverteilung V und steuert die Verzögerungseinheit 128 in Abhängigkeit des Ergebnisses dieses Vergleiches an. Dabei stellt der Prozessor 112 die Verzögerung des von der Verzögerungseinheit 128 an die Abregungslichtquelle 106 ausgegebenen Triggersignals T' gegenüber dem als Referenztakt dienenden Triggersignal T so ein, dass die Abweichung der durch den Detektor 110 erfassten zeitlichen Verteilung der Fluoreszenzphotonen gegenüber der Sollverteilung V minimiert ist. Das Einstellen der Verzögerung zwischen den Triggersignalen T' und T erfolgt vorzugsweise nach Art eines Regelkreises während der laufenden Bildaufnahme.

Wie die typische Verteilung gemäß Figur 3 weist auch die in Figur 4 dargestellte Sollverteilung V zunächst ein Verteilungsmaximum Va auf. Daran schließen nacheinander ein erster abfallender Verteilungsabschnitt Vb und ein zweiter, relativ schwächer abfallender Verteilungsabschnitt Vc an. Die beiden Verteilungsabschnitte Vb und Vc repräsentieren zwei verschiedene Populationen an Lebensdauern. So zeigt ein großerTeil der Fluoreszenz, der durch den ersten Verteilungsabschnitt Vb repräsentiert ist, nur eine sehr kurze Lebensdauer. Der übrige Teil der Fluoreszenz, den der zweite Verteilungsabschnitt Vc widerspiegelt, zeigt einen exponentiellen Abfall mit der gleichen Zeitkonstante wie in dem in Figur 3 dargestellten Fall, in dem der Abregungspuls keine Wirkung hat.

Die dem ersten Verteilungsabschnitt Vb entsprechende kurzlebige Population besteht zu einem Teil aus Fluorophoren, die sich an der Stelle der Nullstelle der Abregungslichtverteilung befinden. Der andere Teil der kurzlebigen Population besteht aus Fluorophoren, die sich in den von der Abregungslichtverteilung beaufschlagten Bereichen außerhalb der Nullstelle befinden und denen es gelungen ist, ein Fluoreszenzphoton spontan zu emittieren, bevor sie durch stimulierte Emission durch die Abregungslichtverteilung abgeregt worden sind. Der starke Abfall dieser kurzelbigen Population ist bedingt durch das einsetzende Abregungslicht, das bei einem Teil der Fluorophore stimulierte Emission induziert und somit einen zweiten Zerfallskanal mit kurzer Zeitkonstante eröffnet. Die zweite, langlebige Population ist im Wesentlichen aus Fluorophoren gebildet, die nicht durch den Abregungspuls abgeregt worden sind. Diese Fluorophore befinden sich am Ort der Nullstelle der Abregungslichtverteilung oder in dessen Nähe. Dementsprechend weist der zweite Verteilungsabschnitt Vc einen der Zeitkonstante gemäß Figur 3 entsprechenden exponentiellen Abfall auf, der schwächer ist als der Abfall des ersten Verteilungsabschnittes Vb.

In Figur 5 ist eine zeitliche Verteilung der Fluoreszenzphotonen für einen Fall dargestellt, in dem die Verzögerung des Abregungspulses gegenüber dem Anregungspuls zu groß eingestellt ist, d.h. der Abregungspuls zu spät auf den Beleuchtungszielpunkt trifft. In diesem Fall kann ein großer Teil der Fluorophore bereits durch spontane Emission Anregungslicht absorbieren, insbesondere auch Fluorophore, die weit entfernt von der Nullstelle der Abregungslichtverteilung sind und deren Fluoreszenzphotonen die Auflösung des Bildes verschlechtern. Erst sehr spät werden die restlichen Fluorophore in diesem Bereich durch das Abregungslicht kontrolliert abgeregt, was in dem Diagramm nach Figur 5 durch den Abfall der Photonenrate zu diesem späten Zeitpunkt sichtbar wird. Das resultierende Bild wird somit nur eine schlechte Auflösung haben, da der effektive Anregungsfokus relativ groß ist.

Die vorstehend erläuterten Ausführungsformen sind rein beispielhaft zu verstehen. Sie sind insbesondere nicht darauf beschränkt, dass die Anregungslichtverteilung den Referenztakt vorgibt, bezüglich dessen die Verzögerung der Abregungslichtverteilung gesteuert wird. Es ist ebenso denkbar, dass die Abregungslichtverteilung den Referenztakt vorgibt und die Anregungslichtverteilung relativ zu diesem Takt verzögert wird.

Ferner sind in dem Ausführungsbeispiel nach Figur 1 die Anregungslichtquelle 102 und die Abregungslichtquelle 106 jeweils als gepulste Laserlichtquelle ausgeführt. Ebenso ist es aber möglich, für die Lichtquellen 102, 106 modulierte Quellen zu verwenden, sofern die hierdurch bereitgestellte Lichtmodulation unter Berücksichtigung der mittleren Lebensdauer der verwendeten Fluorophore hinreichend schnell ist.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar. Einige oder alle Verfahrensschritte können durch (oder unter Verwendung) einer Hardwarevorrichtung ausgeführt werden, wie es zum Beispiel ein Prozessor, ein Mikroprozessor, ein programmierbarer Computer oder eine elektronische Schaltung sein kann. In einigen Ausführungsbeispielen können ein oder mehrere der wichtigsten Verfahrensschritte durch eine solche Vorrichtung ausgeführt werden.

Abhängig von bestimmten Implementierungsanforderungen können Ausführungsbeispiele der Erfindung in Hardware oder Software implementiert werden. Die Implementierung kann mit einem nicht-flüchtigen Speichermedium wie einem digitalen Speichermedium, wie beispielsweise einer Diskette, einer DVD, einem Blu-Ray, einer CD, einem ROM, einem PROM und EPROM, einem EEPROM oder einem FLASH-Speicher, durchgeführt werden, auf dem elektronisch lesbare Steuersignale gespeichert sind, die mit einem programmierbaren Computersystem so zusammenwirken (oder zusammenwirken können), dass das jeweilige Verfahren durchgeführt wird. Daher kann das digitale Speichermedium computerlesbar sein.

Einige Ausführungsbeispiele gemäß der Erfindung umfassen einen Datenträger mit elektronisch lesbaren Steuersignalen, die mit einem programmierbaren Computersystem zusammenwirken können, so dass eines der hierin beschriebenen Verfahren durchgeführt wird.

Im Allgemeinen können Ausführungsbeispiele der vorliegenden Erfindung als Computerprogrammprodukt mit einem Programmcode implementiert werden, wobei der Programmcode für die Ausführung eines der Verfahren wirksam ist, wenn das Computerprogrammprodukt auf einem Computer läuft. Der Programmcode kann beispielsweise auf einem maschinenlesbaren Träger gespeichert werden.

Weitere Ausführungsbeispiele umfassen das Computerprogramm zur Durchführung eines der hierin beschriebenen Verfahren, das auf einem maschinenlesbaren Träger gespeichert ist.

Mit anderen Worten, ein Ausführungsbeispiel der vorliegenden Erfindung ist daher ein Computerprogramm mit einem Programmcode zur Durchführung eines der hierin beschriebenen Verfahren, wenn das Computerprogramm auf einem Computer läuft.

Ein weiteres Ausführungsbeispiel der vorliegenden Erfindung ist daher ein Speichermedium (oder ein Datenträger oder ein computerlesbares Medium), das ein darauf gespeichertes Computerprogramm zum Ausführen eines der hierin beschriebenen Verfahren umfasst, wenn es von einem Prozessor ausgeführt wird. Der Datenträger, das digitale Speichermedium oder das aufgezeichnete Medium sind in der Regel greifbar und/oder nicht übergangslos. Eine weiteres Ausführungsbeispiel der vorliegenden Erfindung ist eine Vorrichtung, wie hierin beschrieben, die einen Prozessor und das Speichermedium umfasst.

Ein weiteres Ausführungsbeispiel der Erfindung ist daher ein Datenstrom oder eine Signalfolge, die das Computerprogramm zur Durchführung eines der hierin beschriebenen Verfahren darstellt. Der Datenstrom oder die Signalfolge kann beispielsweise so konfiguriert werden, dass sie über eine Datenkommunikationsverbindung, beispielsweise über das Internet, übertragen werden.

Ein weiteres Ausführungsbeispiel umfasst ein Verarbeitungsmittel, zum Beispiel einen Computer oder eine programmierbare Logikvorrichtung, das konfiguriert oder angepasst ist, um eines der hierin beschriebenen Verfahren auszuführen.

Ein weiteres Ausführungsbeispiel umfasst einen Computer, auf dem das Computerprogramm zum Ausführen eines der hierin beschriebenen Verfahren installiert ist.

Ein weiteres Ausführungsbeispiel gemäß der Erfindung umfasst eine Vorrichtung oder ein System, das konfiguriert ist, um (zum Beispiel elektronisch oder optisch) ein Computerprogramm zum Ausführen eines der hierin beschriebenen Verfahren an einen Empfänger zu übertragen. Der Empfänger kann beispielsweise ein Computer, eine mobile Vorrichtung, eine Speichervorrichtung oder dergleichen sein. Die Vorrichtung oder das System kann beispielsweise einen Dateiserver zum Übertragen des Computerprogramms an den Empfänger umfassen.

In einigen Ausführungsbeispielen kann eine programmierbare logische Vorrichtung (z.B. eine feldprogrammierbare Gatteranordnung, FPGA) verwendet werden, um einige oder alle Funktionalitäten der hierin beschriebenen Verfahren auszuführen. In einigen Ausführungsbeispielen kann eine feldprogrammierbare Gatteranordnung mit einem Mikroprozessor zusammenarbeiten, um eines der hierin beschriebenen Verfahren durchzuführen. Im Allgemeinen werden die Verfahren vorzugsweise von jedem Hardwaregerät durchgeführt.

### Bezugszeichenliste

- 100: Fluoreszenzmikroskop
- 102: Anregungslichtquelle
- 104: Probe
- 106: Abregungslichtquelle
- 108: Beleuchtungseinheit
- 110: Detektor
- 112: Prozessor
- 114: Spiegel
- 116: wellenlängenselektiver Strahlteiler
- 118: wellenlängenselektiver Strahlteiler
- 120: Rastervorrichtung
- 122: Phasenmaske
- 124: Spiegel
- 126: Objektiv
- 128: Verzögerungseinheit
- E: Anregungslichtverteilung
- D: Abregungslichtverteilung
- M: Maximum der Anregungslichtverteilung
- N: Nullstelle der Abregungslichtverteilung
- V: Sollverteilung
- Va: Maximum der Sollverteilung
- Vb: erster Verteilungsabschnitt
- Vc: zweiter Verteilungsabschnitt

## Patentansprüche

1. Fluoreszenzmikroskop (100), umfassend:
eine Anregungslichtquelle (102), die ausgebildet ist, eine gepulste oder modulierte Anregungslichtverteilung (E) zu erzeugen, welche in einer Probe (104) vorhandene Fluorophore zur spontanen Emission von Fluoreszenzphotonen anregt,
eine Abregungslichtquelle (106), die ausgebildet ist, eine gepulste oder modulierte Abregungslichtverteilung (D) zu erzeugen, welche die durch die Anregungslichtverteilung in der Probe (104) angeregten Fluorophore im Wege einer stimulierten Emission von Fluoreszenzphotonen abregt,
eine Beleuchtungseinheit (108), die ausgebildet ist, die Anregungslichtverteilung (E) und die Abregungslichtverteilung (D) derart zusammenzuführen, dass ein Intensitätsmaximum (M) der Anregungslichtverteilung (E) und ein Intensitätsminimum (N) der Abregungslichtverteilung (D) in einem Beleuchtungszielpunkt einander räumlich überlagert sind,
einen Detektor (110), der ausgebildet ist, die aus dem Beleuchtungszielpunkt emittierten Fluoreszenzphotonen in Abhängigkeit ihrer Ankunftszeiten zu erfassen, und
einen Prozessor (112), der ausgebildet ist, die in dem Beleuchtungszielpunkt erfassten Fluoreszenzphotonen hinsichtlich ihrer Ankunftszeiten auszuwerten,
**dadurch gekennzeichnet, dass** der Prozessor (112) ausgebildet ist, auf Basis dieser Auswertung eine Verzögerung zu steuern, die ein Lichtpuls oder eine Lichtmodulation der Abregungslichtverteilung (D) am Ort des Beleuchtungszielpunktes gegenüber einem Lichtpuls oder einer Lichtmodulation der Anregungslichtverteilung (E) aufweist,
wobei der Prozessor (112) die in dem Beleuchtungszielpunkt erfassten Fluoreszenzphotonen auswertet, indem er eine durch die erfassten Ankunftszeiten gegebene zeitliche Verteilung der Fluoreszenzphotonen mit einer Sollverteilung (V) vergleicht, und die Verzögerung auf Basis dieses Vergleichs steuert.

2. Fluoreszenzmikroskop (100) nach Anspruch 1, bei dem der Detektor (110) ausgebildet ist, die aus dem Beleuchtungszielpunkt emittierten Fluoreszenzphotonen durch zeitkorrelierte Einzelphotonenzählung in Abhängigkeit ihrer Ankunftszeiten zu erfassen.

3. Fluoreszenzmikroskop (100) nach Anspruch 1 oder 2, bei dem der Detektor (110) ausgebildet ist, die Ankunftszeiten der Fluoreszenzphotonen in Bezug auf eine Startzeit zu erfassen, die durch den Lichtpuls oder die Lichtmodulation der Anregungslichtverteilung (E) oder der Abregungslichtlichtverteilung (D) festgelegt ist.

4. Fluoreszenzmikroskop (100) nach einem der vorhergehenden Ansprüche, bei dem die Sollverteilung zeitlich aufeinander folgend ein Verteilungsmaximum (Va), einen ersten abfallenden Verteilungsabschnitt (Vb) und einen zweiten, relativ schwächer abfallenden Verteilungsabschnitt (Vc) aufweist.

5. Fluoreszenzmikroskop (100) nach einem der vorhergehenden Ansprüche, bei dem der Prozessor (112) die Verzögerung auf Basis des Vergleichs nach Art eines Regelkreises einstellt.

6. Fluoreszenzmikroskop (100) nach einem der vorhergehenden Ansprüche, umfassend eine Verzögerungseinheit (128), die durch den Prozessor (112) auf Basis der Auswertung steuerbar ist, um die Verzögerung einzustellen.

7. Fluoreszenzmikroskop (100) nach Anspruch 6, bei dem die Verzögerungseinheit (128) der Anregungslichtquelle (102) oder der Abregungslichtquelle (106) vorgeschaltet ist und an diese Lichtquelle (102, 106) ein erstes Triggersignal (T') ausgibt, um die Verzögerung einzustellen.

8. Fluoreszenzmikroskop (100) nach Anspruch 7, bei dem die eine der beiden Lichtquellen (102, 106), der die Verzögerungseinheit (128) nicht vorgeschaltet ist, ein zweites Triggersignal (T) an die Verzögerungseinheit (128) ausgibt und die Verzögerungseinheit (128) ein gegenüber diesem zweiten Triggersignal (T) zeitlich verzögertes Signal als erstes Triggersignal (T') erzeugt.

9. Fluoreszenzmikroskop (100) nach Anspruch 8, bei dem die eine Lichtquelle (102) das zweite Triggersignal (T) an den Prozessor (112) ausgibt und der Prozessor (112) die Verzögerungseinheit (128) auf Basis des zweiten Triggersignals steuert, das erste Triggersignal (T') zu erzeugen.

10. Fluoreszenzmikroskop (100) nach einem der vorhergehenden Ansprüche, bei dem die Beleuchtungseinheit (108) eine Phasenmaske (128) enthält, die das Intensitätsminimum (N) der Abregungslichtverteilung (D) erzeugt.

11. Fluoreszenzmikroskop (100) nach einem der vorhergehenden Ansprüche, bei dem das Intensitätsminimum (N) der Abregungslichtverteilung (D) eine Intensitätsnullstelle ist.

12. Fluoreszenzmikroskop (100) nach einem der vorhergehenden Ansprüche, umfassend eine Rastereinheit (120) zum Abrastern mehrerer Beleuchtungszielpunkte mit der Anregungslichtverteilung (E) und der Abregungslichtverteilung (D),
wobei der Prozessor (112) ausgebildet, mehrere die Beleuchtungszielpunkte repräsentierende Bildpunkte zu einem Probenbild zusammenzusetzen.

13. Fluoreszenzmikroskop (100) nach Anspruch 12, bei dem der Prozessor (112) ausgebildet ist, die Verzögerung für verschiedene Bereiche des Probenbildes unterschiedlich zu steuern.

14. Verfahren zur Abbildung einer Probe (104) unter Verwendung eines Fluoreszenzmikroskops (100), umfassend folgende Schritte:
Erzeugen einer Anregungslichtverteilung (E), welche in der Probe (104) vorhandene Fluorophore zur spontanen Emission von Fluoreszenzphotonen anregt,
Erzeugen einer Abregungslichtverteilung (D), welche die durch die Anregungslichtverteilung (E) in der Probe (104) angeregten Fluorophore im Wege einer stimulierten Emission von Fluoreszenzphotonen abregt,
Zusammenführen der Anregungslichtverteilung (E) und der Abregungslichtverteilung (D) derart, dass ein Intensitätsmaximum (M) der Anregungslichtverteilung (E) und ein Intensitätsminimum (N) der Abregungslichtverteilung (D) in einem Beleuchtungszielpunkt einander räumlich überlagert sind,
Erfassen der aus dem Beleuchtungszielpunkt emittierten Fluoreszenzphotonen in Abhängigkeit ihrer Ankunftszeiten, und
Auswerten der in dem Beleuchtungszielpunkt erfassten Fluoreszenzphotonen hinsichtlich ihrer Ankunftszeiten,
**gekennzeichnet durch** Steuern einer Verzögerung, die ein Lichtpuls oder eine Lichtmodulation der Abregungslichtverteilung (D) am Ort des Beleuchtungszielpunktes gegenüber einem Lichtpuls oder einer Lichtmodulation der Anregungslichtverteilung (E) aufweist, auf Basis dieser Auswertung,
wobei die in dem Beleuchtungszeitpunkt erfassten Fluoreszenzphotonen ausgewertet werden, indem eine durch die erfassten Ankunftszeiten gegebene zeitliche Verteilung mit einer Sollverteilung (V) verglichen wird, und die Verzögerung auf Basis dieses Vergleichs gesteuert wird.

## Claims

1. Fluorescence microscope (100), comprising:
an excitation light source (102) which is configured to generate a pulsed or modulated excitation light distribution (E) which excites fluorophores present in a sample (104) to spontaneously emit fluorescence photons, a depletion light source (106) which is configured to generate a pulsed or modulated depletion light distribution (D) which depletes the fluorophores excited by the excitation light distribution in the sample (104) by way of a stimulated emission of fluorescence photons, an illumination unit (108) which is configured to combine the excitation light distribution (E) and the depletion light distribution (D) in such a way that an intensity maximum (M) of the excitation light distribution (E) and an intensity minimum (N) of the depletion light distribution (D) are spatially superimposed on one another at an illumination target point,
a detector (110) which is configured to detect the fluorescence photons emitted from the illumination target point as a function of their arrival times, and
a processor (112) which is configured to evaluate the fluorescence photons detected in the illumination target point with regard to their arrival times,
**characterized in that** the processor (112) is configured to control, on the basis of this evaluation, a delay which a light pulse or a light modulation of the depletion light distribution (D) has at the location of the illumination target point with respect to a light pulse or a light modulation of the excitation light distribution (E),
wherein the processor (112) evaluates the fluorescence photons detected in the illumination target point by comparing a temporal distribution of the fluorescence photons given by the detected arrival times with a target distribution (V), and controls the delay on the basis of this comparison.

2. The fluorescence microscope (100) according to claim 1, wherein the detector (110) is configured to detect the fluorescence photons emitted from the illumination target point by time-correlated single photon counting as a function of their arrival times.

3. The fluorescence microscope (100) according to claim 1 or 2, wherein the detector (110) is configured to detect the arrival times of the fluorescence photons with respect to a start time determined by the light pulse or the light modulation of the excitation light distribution (E) or the depletion light distribution (D).

4. The fluorescence microscope (100) according to one of the preceding claims, wherein the target distribution has a distribution maximum (Va), a first decreasing distribution section (Vb) and a second, relatively weaker decreasing distribution section (Vc) in succession in time.

5. The fluorescence microscope (100) according to any one of the preceding claims, wherein the processor (112) adjusts the delay based on the comparison in a closed loop manner.

6. The fluorescence microscope (100) according to any one of the preceding claims, comprising a delay unit (128) controllable by the processor (112) based on the evaluation to adjust the delay.

7. The fluorescence microscope (100) according to claim 6, wherein the delay unit (128) is connected upstream of the excitation light source (102) or the depletion light source (106) and outputs a first trigger signal (T') to this light source (102, 106) in order to set the delay.

8. The fluorescence microscope (100) according to claim 7, wherein the one of the two light sources (102, 106), which is not preceded by the delay unit (128), outputs a second trigger signal (T) to the delay unit (128) and the delay unit (128) generates a signal delayed in time with respect to this second trigger signal (T) as a first trigger signal (T').

9. The fluorescence microscope (100) according to claim 8, wherein the one light source (102) outputs the second trigger signal (T) to the processor (112) and the processor (112) controls the delay unit (128) to generate the first trigger signal (T') based on the second trigger signal.

10. The fluorescence microscope (100) according to any one of the preceding claims, wherein the illumination unit (108) comprises a phase mask (128) generating the intensity minimum (N) of the depletion light distribution (D) .

11. The fluorescence microscope (100) according to one of the preceding claims, wherein the intensity minimum (N) of the depletion light distribution (D) is an intensity null.

12. The fluorescence microscope (100) according to any one of the preceding claims, comprising a scanning unit (120) for scanning a plurality of illumination target points with the excitation light distribution (E) and the depletion light distribution (D),
wherein the processor (112) is configured to combine a plurality of pixels representing the illumination target points to form a sample image.

13. The fluorescence microscope (100) according to claim 12, wherein the processor (112) is configured to control the delay differently for different areas of the sample image.

14. A method of imaging a sample (104) using a fluorescence microscope (100), comprising the steps of:
generating an excitation light distribution (E) which excites fluorophores present in the sample (104) to spontaneously emit fluorescence photons,
generating a depletion light distribution (D) which depletes the fluorophores excited by the excitation light distribution (E) in the sample (104) by way of stimulated emission of fluorescence photons,
combining the excitation light distribution (E) and the depletion light distribution (D) in such a way that an intensity maximum (M) of the excitation light distribution (E) and an intensity minimum (N) of the depletion light distribution (D) are spatially superimposed in an illumination target point,
detecting the fluorescence photons emitted from the illumination target point as a function of their arrival times, and
evaluating the fluorescence photons detected in the illumination target point with regard to their arrival times,
**characterized by** controlling a delay which a light pulse or a light modulation of the depletion light distribution (D) has at the location of the illumination target point with respect to a light pulse or a light modulation of the excitation light distribution (E), on the basis of this evaluation,
wherein the fluorescence photons detected at the illumination time point are evaluated by comparing a temporal distribution given by the detected arrival times with a target distribution (V), and the delay is controlled on the basis of this comparison.

## Revendications

1. Microscope à fluorescence (100), comprenant :
une source de lumière d'excitation (102) qui est conçue pour générer une répartition de lumière d'excitation (E) pulsée ou modulée qui excite des fluorophores présents dans un échantillon (104) pour qu'ils émettent spontanément des photons de fluorescence,
une source de lumière de désexcitation (106) qui est conçue pour générer une répartition de lumière de désexcitation (D) pulsée ou modulée qui désexcite les fluorophores excités par la répartition de lumière d'excitation dans l'échantillon (104) par l'intermédiaire d'une émission stimulée de photons de fluorescence,
une unité d'éclairage (108) qui est conçue pour combiner la répartition de lumière d'excitation (E) et la répartition de lumière de désexcitation (D) de telle sorte qu'un maximum d'intensité (M) de la répartition de lumière d'excitation (E) et un minimum d'intensité (N) de la répartition de lumière de désexcitation (D) soient superposés l'un à l'autre dans l'espace en un point cible d'éclairage,
un détecteur (110) qui est conçu pour détecter les photons de fluorescence émis à partir du point cible d'éclairage en fonction de leurs temps d'arrivée, et
un processeur (112) qui est conçu pour évaluer les photons de fluorescence détectés dans le point cible d'éclairage en ce qui concerne leurs temps d'arrivée,
**caractérisé en ce que** le processeur (112) est conçu pour commander, sur la base de ladite évaluation, un retard qu'une impulsion lumineuse ou une modulation de lumière de la répartition de lumière de désexcitation (D) présente à l'emplacement du point cible d'éclairage par rapport à une impulsion lumineuse ou à une modulation de lumière de la répartition de lumière d'excitation (E),
dans lequel le processeur (112) évalue les photons de fluorescence détectés dans le point cible d'éclairage en comparant une répartition temporelle des photons de fluorescence donnée par les temps d'arrivée détectés à une répartition de consigne (V), et commande le retard sur la base de ladite comparaison.

2. Microscope à fluorescence (100) selon la revendication 1, dans lequel le détecteur (110) est conçu pour détecter les photons de fluorescence émis à partir du point cible d'éclairage par comptage de photons individuels corrélé dans le temps, en fonction de leurs temps d'arrivée.

3. Microscope à fluorescence (100) selon la revendication 1 ou 2, dans lequel le détecteur (110) est conçu pour détecter les temps d'arrivée des photons de fluorescence par rapport à un temps de départ qui est déterminé par l'impulsion lumineuse ou la modulation de lumière de la répartition de lumière d'excitation (E) ou de la répartition de lumière de désexcitation (D).

4. Microscope à fluorescence (100) selon l'une des revendications précédentes, dans lequel la répartition de consigne présente successivement dans le temps un maximum de répartition (Va), une première section de répartition décroissante (Vb) et une seconde section de répartition (Vc) décroissant relativement plus faiblement.

5. Microscope à fluorescence (100) selon l'une des revendications précédentes, dans lequel le processeur (112) ajuste le retard sur la base de la comparaison à la manière d'un circuit de régulation.

6. Microscope à fluorescence (100) selon l'une des revendications précédentes, comprenant une unité à retard (128) qui peut être commandée par le processeur (112) sur la base de l'évaluation afin d'ajuster le retard.

7. Microscope à fluorescence (100) selon la revendication 6, dans lequel l'unité à retard (128) est connectée en amont de la source de lumière d'excitation (102) ou de la source de lumière de désexcitation (106) et délivre un premier signal de déclenchement (T') à ladite source de lumière (102, 106) afin d'ajuster le retard.

8. Microscope à fluorescence (100) selon la revendication 7, dans lequel l'une des deux sources de lumière (102, 106), en amont de laquelle l'unité à retard (128) n'est pas montée, délivre un second signal de déclenchement (T) à l'unité à retard (128) et l'unité à retard (128) génère un signal retardé dans le temps par rapport audit second signal de déclenchement (T) en tant que premier signal de déclenchement (T').

9. Microscope à fluorescence (100) selon la revendication 8, dans lequel ladite source de lumière (102) délivre le second signal de déclenchement (T) au processeur (112) et le processeur (112) commande l'unité à retard (128) sur la base du second signal de déclenchement pour générer le premier signal de déclenchement (T').

10. Microscope à fluorescence (100) selon l'une des revendications précédentes, dans lequel l'unité d'éclairage (108) comprend un masque de phase (128) qui génère le minimum d'intensité (N) de la répartition de lumière de désexcitation (D).

11. Microscope à fluorescence (100) selon l'une des revendications précédentes, dans lequel le minimum d'intensité (N) de la répartition de lumière de désexcitation (D) est un zéro d'intensité.

12. Microscope à fluorescence (100) selon l'une des revendications précédentes, comprenant une unité de balayage (120) destinée à balayer une pluralité de points cibles d'éclairage avec la répartition de lumière d'excitation (E) et la répartition de lumière de désexcitation (D),
dans lequel le processeur (112) est conçu pour assembler une pluralité de pixels représentant les points cibles d'éclairage en une image d'échantillon.

13. Microscope à fluorescence (100) selon la revendication 12, dans lequel le processeur (112) est conçu pour commander différemment le retard pour différentes zones de l'image d'échantillon.

14. Procédé de formation d'image d'un échantillon (104) par utilisation d'un microscope à fluorescence (100), comprenant les étapes suivantes :
génération d'une répartition de lumière d'excitation (E) qui excite des fluorophores présents dans l'échantillon (104) pour qu'ils émettent spontanément des photons de fluorescence,
génération d'une répartition de lumière de désexcitation (D) qui désexcite les fluorophores excités par la répartition de lumière d'excitation (E) dans l'échantillon (104) par l'intermédiaire d'une émission stimulée de photons de fluorescence,
combinaison de la répartition de lumière d'excitation (E) et de la répartition de lumière de désexcitation (D) de telle sorte qu'un maximum d'intensité (M) de la répartition de lumière d'excitation (E) et un minimum d'intensité (N) de la répartition de lumière de désexcitation (D) soient superposés l'un à l'autre dans l'espace en un point cible d'éclairage,
détecter les photons de fluorescence émis à partir du point cible d'éclairage en fonction de leurs temps d'arrivée, et
évaluer les photons de fluorescence détectés dans la cible d'éclairage en ce qui concerne leurs temps d'arrivée,
**caractérisé par** le fait de commander, sur la base de ladite évaluation, un retard qu'une impulsion lumineuse ou une modulation de lumière de la répartition de lumière de désexcitation (D) présente à l'emplacement du point cible d'éclairage par rapport à une impulsion lumineuse ou une modulation de lumière de la répartition de lumière d'excitation (E),
dans lequel les photons de fluorescence détectés dans le point cible d'éclairage sont évalués en comparant une répartition temporelle donnée par les temps d'arrivée détectés à une répartition de consigne (V), et le retard est commandé sur la base de ladite comparaison.
